# FASCICULE DE BREVET EUROPEEN

(11) **EP 2 202 182 B1**
(45) Date de publication et mention de la délivrance du brevet: **08.02.2012**
(21) Numéro de dépôt: 09306190.1
(22) Date de dépôt: 07.12.2009
(51) Int. Cl.: B65G 19/10, E01C 19/20

(54) **Système d'épandage d'un produit granuleux**
System zum Verteilen eines körnigen Produkts
System for spreading a granular product

(30) Priorité: 29.12.2008 FR 0859100
(43) Date de publication de la demande: 30.06.2010
(60) Demande divisionnaire: 11159509.6
(73) Titulaire: ACOMETIS - Les Ateliers de Construction Métallique Industrielle de Soultz, 68360 Soultz (FR)
(72) Inventeur: Aubert, Claude, F-68360 Soultz (FR)
(74) Mandataire: Rhein, Alain

(56) Documents cités:
- EP-A- 1 048 785
- DE-A1- 10 130 022
- FR-A- 2 721 627
- FR-A- 2 781 825
- SU-A1- 695 929
- US-A- 4 253 791
- US-A1- 2003 034 406

## Description

La présente invention a trait à un système 'épandage d'un produit granuleux, plus particulièrement un produit de déneigement comme par exemple du sel ou du sable, tel que décrit dans le préambule de la revendication 1, ainsi qu'à un engin comportant un tel système.

Cette invention concerne, alors, le domaine de la fabrication des dispositifs conçus pour assurer l'épandage d'un produit granuleux contenu dans un moyen de stockage. Cette invention trouvera une application toute particulière dans le cadre de la conception des engins pour l'entretien des routes, plus particulièrement des engins pour épandre un produit de déneigement sur la chaussée et comportant un tel dispositif d'extraction.

En fait, un tel engin d'épandage se présente, usuellement, sous la forme d'un camion comportant, à l'arrière de la cabine et implanté sur le châssis de ce camion, un système conçu pour épandre un produit granuleux. Ce système d'épandage est au moins en partie constitué par un dispositif pour extraire le produit granuleux hors d'un moyen de stockage contenant ce produit ainsi que par un dispositif pour épandre le produit extrait.

De manière connue, un tel dispositif d'extraction comporte un moyen pour le stockage du produit à épandre, ce moyen de stockage adoptant, plus particulièrement, la forme d'une trémie délimitée par des parois longitudinales, par une paroi avant, par une paroi arrière ainsi que par un fond sur lequel repose le produit à extraire.

Ce dispositif d'extraction comporte, encore, un moyen pour acheminer le produit à extraire hors de ce moyen de stockage.

Un tel moyen d'acheminement peut comporter une vis d'Archimède implantée au niveau du fond du moyen de stockage, plus particulièrement dans un réceptacle ménagé dans ce fond.

Une alternative à une telle vis consiste en ce qu'un tel moyen d'acheminement peut comporter une pluralité d'éléments mobiles, au moins un moyen pour le raccordement de ces éléments mobiles ainsi qu'au moins un moyen pour l'entraînement d'un tel moyen de raccordement et/ou de ces éléments mobiles. En fait, ces éléments mobiles ainsi que ce ou ces moyens de raccordement sont agencés en sorte de constituer un circuit fermé formant une boucle autour du fond du moyen de stockage et de manière à ce que ces éléments mobiles puissent se déplacer par rapport et au-dessus de ce fond.

Un tel élément mobile comporte au moins un moyen pour racler le fond du moyen de stockage ce qui permet, lorsqu'un tel élément mobile est en mouvement par rapport à ce fond, d'entraîner avec lui le produit à extraire hors de ce moyen de stockage.

Un premier mode de réalisation consiste, alors, en ce que le ou les moyens d'entraînement se situent directement à l'intérieur de la trémie du moyen de stockage de sorte qu'ils baignent, littéralement, dans le produit à extraire. Ceci a pour effet de provoquer l'usure (par abrasion) et la corrosion (plus particulièrement lorsque le produit à extraire est constitué par du sel) d'un tel moyen d'entraînement. De plus, ce produit s'amalgame rapidement autour et sur les pièces du moyen d'entraînement ce qui a pour effet d'introduire involontairement ce produit au coeur de la machine, notamment dans des endroits particulièrement sensibles de cette machine, où ce produit a tendance à s'accumuler et à occasionner des dégradations particulièrement préjudiciables au fonctionnement approprié de cette machine (notamment lorsque ce produit est constitué par du sel).

Pour remédier à ces inconvénients, il a été imaginé un deuxième mode de réalisation dans lequel un élément mobile comporte, d'une part, un racleur positionné à l'intérieur de la trémie et au dessus de son fond et, d'autre part, un moyen pour son raccordement à au moins un moyen d'entraînement situé à l'extérieur de cette trémie. Cet élément mobile s'étend, par conséquent, partiellement à l'intérieur et partiellement à l'extérieur de la trémie de sorte que, pour permettre le déplacement de cet élément mobile, le dispositif d'extraction comporte un interstice, ménagé entre les parois longitudinales et le fond du moyen de stockage, et au travers duquel s'étend cet élément mobile. La présence de cet interstice autorise un écoulement involontaire du produit à extraire au travers de cet interstice et en direction des moyens d'entraînement avec les mêmes effets préjudiciables que susmentionné. Une solution à ce problème consiste à implanter, à proximité de cet interstice, un système de chicane destiné à empêcher un tel écoulement. En fait, il s'avère que ce système permet seulement de réduire (de plus uniquement temporairement) un tel écoulement, ceci en raison de la poussée exercée continuellement sur le produit à extraire et en direction de cet interstice par les éléments mobiles. Sous l'effet de cette poussée, le produit s'écoule en direction des moyens d'entraînement avec, là encore, les mêmes effets.

Dans le document DE 101 30 022 il est décrit un système pour produit granuleux comportant un dispositif pour extraire ce produit granuleux.

Le document EP-1.048.785 concerne un dispositif d'épandage d'un matériau granulaire, en particulier pour le traitement des routes.

La présente invention se veut à même de remédier aux inconvénients des dispositifs de l'état de la technique.

A cet effet, l'invention concerne un système d'épandage d'un produit granuleux conforme à la revendication 1.

Une caractéristique additionnelle consiste en ce que le dispositif comporte, au moins en partie aval du moyen d'acheminement et au moins à l'extérieur du moyen de stockage, un moyen pour canaliser le produit à extraire entre les branches parallèles des éléments mobiles, ce moyen de canalisation étant positionné au dessus des éléments mobiles, entre les deux branches parallèles d'un tel élément mobile, et présentant une largeur inférieure à l'espacement défini entre ces deux branches parallèles.

Le dispositif d'extraction objet de cette invention comporte une pluralité d'éléments mobiles pourvus, chacun, de deux branches parallèles s'étendant dans l'interstice défini entre le fond et les parois longitudinales du moyen de stockage, ceci jusqu'à proximité (de préférence) immédiate de l'élément mobile suivant. La présence de telles branches parallèles permet, avantageusement, de refermer intégralement cet interstice et, par conséquent, d'empêcher l'écoulement du produit à extraire au travers d'un tel interstice.

Cette paroi longitudinale comporte un joint qui est maintenu en applique contre une telle branche ce qui permet, avantageusement, de garantir l'étanchéité du dispositif au niveau de cet interstice.

Ce dispositif comporte, encore, un moyen pour canaliser le produit à extraire à sa sortie du moyen de stockage. Ce moyen de canalisation permet, avantageusement, de réduire la largeur flux de produit et de confiner ce flux entre les deux branches d'un élément mobile. Ceci permet, avantageusement, de libérer une telle branche de l'emprise d'une paroi longitudinale (ou de son joint) en vue d'autoriser le retournement de cet élément mobile lorsque celui-ci arrive au niveau de l'extrémité aval du dispositif d'extraction.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée d'un engin d'épandage d'un produit granuleux et comportant un dispositif d'extraction conforme à l'invention ;
- la figure 2 est une vue schématisée et de dessus du dispositif d'extraction que comporte l'engin d'épandage illustré figure 1 ;
- la figure 3 est une vue schématisée et en détail d'une pluralité d'éléments mobiles et de moyens de raccordement que comporte le dispositif d'extraction illustré figure 2 ;
- la figure 4 est une vue schématisée et en coupe selon IV-IV du dispositif d'extraction illustré figure 2 ;
- la figure 5 est une vue schématisée et en coupe selon V-V du dispositif illustré figure 2.

La présente invention concerne le domaine de la fabrication des dispositifs conçus pour assurer l'extraction, hors d'un moyen de stockage, d'un produit granuleux contenu dans ce moyen de stockage.

Cette invention trouvera une application particulière dans le domaine agro-alimentaire, notamment lorsqu'il s'agit d'extraire un produit granuleux (comme de la farine ou analogue) contenu dans un silo.

Cependant et tel qu'il ressortira de la suite de la description, cette invention trouvera plus particulièrement une application dans le domaine de la fabrication des engins pour l'entretien des routes, plus spécifiquement conçus pour épandre un produit de déneigement (comme par exemple du sable ou du sel de déneigement) sur la chaussée.

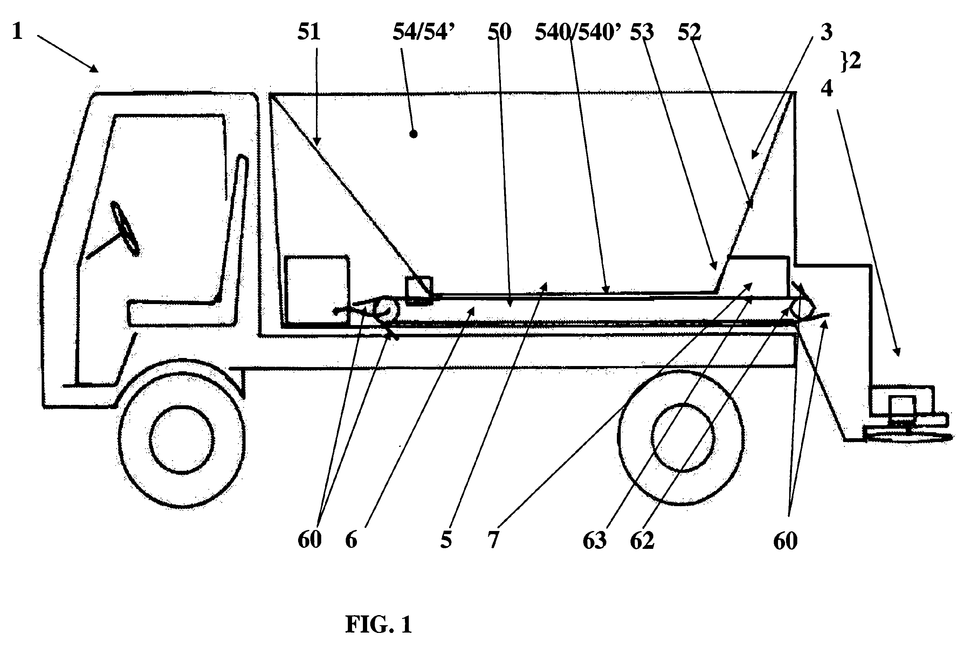

Tel que visible figure 1, un tel engin d'épandage 1 adopte la forme d'un camion comportant un châssis sur lequel est positionné un système 2 conçu pour assurer l'épandage d'un tel produit granuleux.

Ce système d'épandage 2 est, au moins en partie, constitué par un dispositif 3 pour extraire ce produit granuleux ainsi que par un dispositif 4 pour épandre le produit extrait par ce dispositif d'extraction 3.

De manière connue en soi, un tel dispositif d'extraction 3 comporte, d'une part, un moyen 5 pour stocker le produit granuleux à extraire. Un tel moyen de stockage 5 adopte, usuellement, la forme d'une trémie comportant :
- un fond 50 sur lequel vient reposer le produit granuleux à extraire et s'étendant à l'extérieur du moyen de stockage 5 et en direction du dispositif d'épandage 4 ;
- une paroi avant 51 orientée en direction de l'avant de l'engin d'épandage 1 ;
- une paroi arrière 52 orientée en direction de l'arrière de cet engin 1 et pourvue d'une ouverture 53 pour la sortie du produit à extraire hors de cette trémie, ceci en vue de l'alimentation du dispositif d'épandage 4 ;
- des parois longitudinales (54 ; 54') s'étendant entre les parois avant 51 et arrière 52 du moyen de stockage 5.

A ce propos, on observera que ces parois longitudinales (54, 54') s'étendent en direction du fond 50 de ce moyen de stockage 5 et présentent un bord d'extrémité (540 ; 540') s'étendant de manière longitudinale par rapport à ce fond 50 et au dessus de celui-ci 50, ceci à une distance déterminée de ce fond 50 de manière à définir un interstice 55 entre ce fond 50 et une telle paroi longitudinale (540 ; 540').

D'autre part, ce dispositif d'extraction 3 comporte un moyen 6 pour acheminer le produit à extraire hors du moyen de stockage 5, ceci dans une direction d'acheminement D déterminée correspondant à celle du dispositif d'épandage 4.

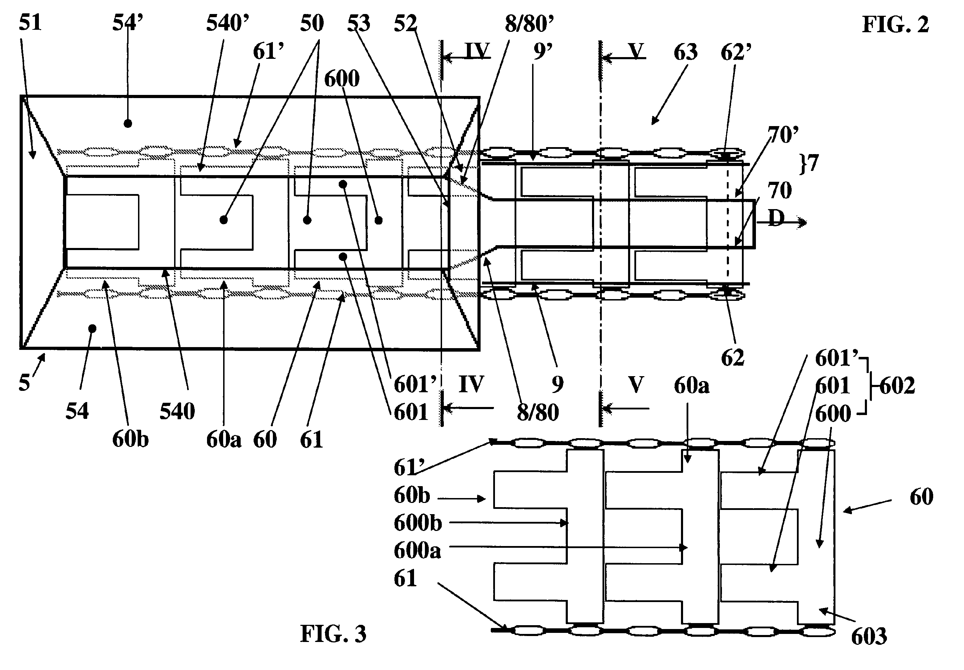

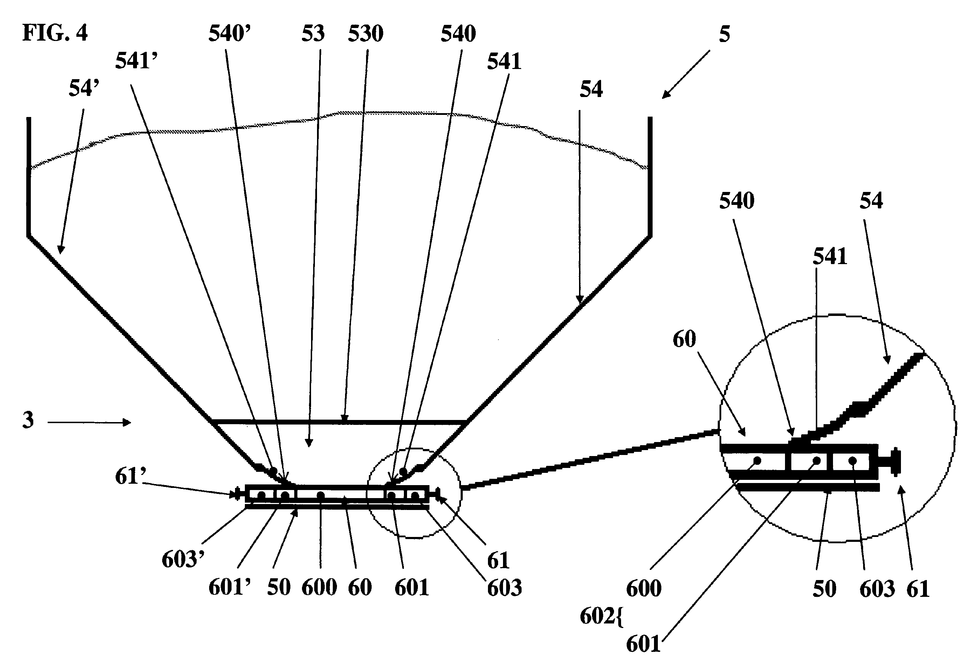

Tel que visible sur les figures 3 et 4, ce moyen d'acheminement 6 comporte une succession d'éléments mobiles (60 ; 60a ; 60b), montés en déplacement par rapport au fond 50 du moyen de stockage 5, plus particulièrement au dessus de ce fond 50 et à proximité de la surface de celui-ci 50.

Un tel élément mobile 60 comporte au moins un moyen 600, s'étendant transversalement par rapport à la direction D d'acheminement du produit à extraire, et conçu pour racler le fond 50 du moyen de stockage 5, ceci en vue de l'entraînement du produit à extraire reposant sur ce fond 50.

A ce propos, on observera que le dispositif d'extraction 3 est conçu en sorte que ce moyen de raclage 600 soit positionné à l'intérieur du moyen de stockage 5 au moins pendant l'extraction du produit hors de ce moyen de stockage 5.

Un mode préféré de réalisation consiste en ce qu'un tel moyen de raclage 600 est constitué par une portion rectiligne que comporte l'élément mobile 60 et qui s'étend perpendiculairement par rapport à la direction D d'acheminement du produit à extraire.

Une caractéristique additionnelle consiste en ce que le moyen de raclage 600 d'une partie au moins des éléments mobiles 60 est pourvu d'un organe (usuellement dénommé brise-motte et adoptant, notamment, la forme d'une griffe ou analogue) conçu pour déstructurer un (éventuel) agglomérat de produit à extraire.

Le moyen d'acheminement 6 comporte, de plus, au moins un moyen (61, 61') pour le raccordement d'au moins deux éléments mobiles (60, 60a ; 60a, 60b) se succédant dans la succession de ces éléments mobiles (60 ; 60a ; 60b).

Un tel moyen de raccordement (61, 61') est positionné à l'extérieur du moyen de stockage 5, plus particulièrement de manière latérale par rapport au fond 50 de ce moyen de stockage 5, et s'étend longitudinalement par rapport à celui-ci 50.

Un mode préféré de réalisation consiste en ce que le moyen d'acheminement 6 comporte deux moyens de raccordement (61, 61'), positionnés de part et d'autre du fond 50, et constitués, chacun, par une chaîne présentant des maillons.

A ce propos, on observera que l'un 61 de ces moyens de raccordement (61, 61') est, en fait, associé à un côté latéral des éléments mobiles (60) tandis que l'autre moyen de raccordement 61' est associé à l'autre coté latéral de ces éléments mobiles 60 comme illustré figures 2 et 3.

Plus particulièrement, un tel moyen de raccordement (61, 61') est associé à une extrémité latérale d'un tel élément mobile 60.

A ce propos, on observera qu'un tel élément mobile 60, soit comporte un moyen pour la réception d'un tel moyen de raccordement (61, 61'), soit (et de préférence) est rendu solidaire (notamment par soudure, boulonnage ou autre) d'un tel moyen de raccordement (61, 61'), plus particulièrement d'un maillon que comporte la chaîne d'un tel moyen de raccordement (61, 61').

Tel qu'évoqué ci-dessus, un tel moyen de raccordement (61, 61') est positionné à l'extérieur du moyen de stockage 5 tandis le moyen de raclage 600 de l'élément mobile 60 est mobile à l'intérieur de ce moyen de stockage 5. Il en résulte qu'un tel élément mobile 60 s'étend entre l'intérieur et l'extérieur de ce moyen de stockage 5, plus particulièrement au travers de l'interstice 55 mentionnée ci-dessus.

Une autre caractéristique consiste en ce que les éléments mobiles (60 ; 60a ; 60b) ainsi que les moyens de raccordement (61, 61') sont agencés en sorte de constituer un circuit fermé formant une boucle autour du fond 50 du moyen de stockage 5 et de manière à ce que ces éléments mobiles (60 ; 60a ; 60b) soient positionnés par-dessus ce fond 50, au moins lorsqu'ils sont positionnés à l'intérieur du moyen de stockage 5.

Tel qu'évoqué ci-dessus, ces éléments mobiles 60 sont mobiles au moins par rapport au fond 50 du moyen de stockage 5.

Aussi et selon une caractéristique additionnelle, le moyen d'acheminement 6 comporte, encore, au moins un moyen (62 ; 62') pour l'entraînement de ces éléments mobiles (60, 60a, 60b) dans la direction D d'acheminement du produit à extraire, plus particulièrement via au moins un moyen (61 ; 61') pour le raccordement de ces éléments mobiles (60, 60a, 60b).

A ce propos, on observera que le moyen d'acheminement 6 comporte, de préférence, deux moyens d'entraînement (62 ; 62') associés, chacun, à un tel moyen de raccordement (61 ; 61').

En fait, un tel moyen d'entraînement (62 ; 62') comporte au moins une roue dentée, pourvue de dents conçues pour coopérer avec les maillons de la chaîne d'un moyen de raccordement (61 ; 61'), et mue par un moteur que comporte le moyen d'acheminement 6.

Tel que visible sur les figures en annexe, un tel moyen d'entraînement (62, 62') est, de préférence, implanté en partie aval du moyen d'acheminement 6, notamment au niveau de l'extrémité distale du fond 50 orientée en direction du dispositif d'épandage 4.

Selon l'invention, chaque élément mobile (60 ; 60a, 60b) comporte deux branches parallèles (601, 601') qui, au moins lorsque cet élément mobile (60 ; 60a ; 60b) est positionné à l'intérieur du moyen de stockage 5 :
- s'étendent à partir du moyen de raclage 600 que comporte un tel élément mobile (60 ; 60a) et en direction d'un autre élément mobile (60a ; 60b) de la succession d'éléments mobiles (60 ; 60a ; 60b);
- présentent, chacune (601, 601'), une extrémité libre positionnée à proximité de cet autre élément mobile (60a ; 60b);
- sont positionnées, chacune (601 ; 601'), entre le fond 50 et le bord d'extrémité (540 ; 540') d'une paroi interne longitudinale (54 ; 54') que comporte le moyen de stockage 5.

Tel que visible sur les figures en annexe, un tel élément mobile 60 adopte une forme sensiblement plane.

De plus, un tel élément mobile 60 présente au moins une portion 602, adoptant une forme sensiblement en « U », et comportant les deux branches parallèles (601, 601') ainsi que le moyen de raclage 600, raccordant ces deux branches parallèles (601, 601') ou (et de préférence) à partir duquel 600 s'étendent ces deux branches parallèles (601 ; 601').

Une telle portion 602 en « U » s'étend dans un plan qui, lorsque l'élément mobile 60 est positionné par dessus le fond 50 du moyen de stockage 5, est parallèle à ce fond 50.

Une autre caractéristique d'un tel élément mobile 60 consiste en ce qu'il comporte des parties (603 ; 603'), d'une part, conçues pour relier cet élément mobile 60 à un moyen de raccordement (61 ; 61') et, d'autre part, rendues solidaires d'un tel moyen de raccordement (61 ; 61').

A ce propos, on observera qu'un tel élément mobile 60 comporte, alors, une traverse, d'une part, à partir de laquelle s'étendent les branches parallèles (601 ; 601'), d'autre part, comportant le moyen de raclage 600 ainsi que, de part et d'autre de ce moyen de raclage 600 et dans le prolongement de celui-ci 600, lesdites parties de liaison (603 ; 603').

En fait, ces parties de liaison (603 ; 603') s'étendent latéralement et de part et d'autre d'une portion 602 en « U » que comporte un tel élément mobile 60, plus particulièrement au niveau du moyen de raclage 600.

Encore une autre caractéristique consiste en ce qu'un tel élément mobile 60 est constitué par une pièce unique, d'une part, découpée dans une même plaque plane, d'autre part, comportant au moins les branches parallèles (601 ; 601') et le moyen de raclage 600, voire encore les parties de liaison (603 ; 603'), et, d'autre part encore, s'étendant dans un plan qui, lorsque cet élément mobile 60 est positionné par dessus le fond 50 du moyen de stockage 5, est parallèle à ce fond 50.

Tel que susmentionné, un tel élément mobile 60 est, encore, rendu solidaire (notamment par soudure, boulonnage ou autre) d'au moins un moyen de raccordement (61, 61').

A ce propos, on observera que c'est, plus particulièrement, une partie de liaison (603 ; 603'), que comporte un tel élément mobile 60, et qui est rendue solidaire d'un tel moyen de raccordement (61 ; 61').

En fait, une telle partie de liaison (603 ; 603') est rendue solidaire d'un tel moyen de raccordement (61 ; 61') en étant soudée, latéralement et au niveau de son extrémité libre, à un maillon que comporte une chaîne d'un tel moyen de raccordement (61 ; 61').

Une caractéristique additionnelle de l'invention consiste en ce que les branches parallèles (601, 601') d'un même élément mobile (60 ; 60a) s'étendant à partir du moyen de raclage (600 ; 600a) que comporte cet élément mobile (60 ; 60a), ceci en direction d'un autre élément mobile (60a ; 60b) - plus particulièrement en direction d'un moyen de raclage (600a ; 600b) d'un tel autre élément mobile (60a ; 60b) - que comporte la succession d'éléments mobiles (60, 60a, 60b).

A ce propos, on observera que, lorsqu'un tel élément mobile 60 est positionné au dessus du fond 50 du moyen de stockage 5, ces branches parallèles (601, 601') de cet élément mobile 60 sont orientées dans la direction D d'acheminement du produit à extraire ou, et de préférence (comme visible sur les figures en annexe), dans une direction opposée à celle D d'acheminement du produit à extraire.

Tel que susmentionné, les branches (601, 601') d'un élément mobile (60 ; 60a) présentent, chacune, une extrémité libre positionnée à proximité d'un autre élément mobile (60a ; 60b), plus particulièrement à proximité du moyen de raclage (600a ; 600b) de cet autre élément mobile (60a ; 60b). En fait, l'extrémité libre d'une telle branche (601, 601') est positionnée, de préférence, à proximité immédiate d'un tel élément mobile (60a ; 60b) ce qui permet de réaliser une quasi continuité entre les éléments mobiles (60, 60a, 60b), ceci au niveau de l'interstice 55 défini entre le fond 50 et le bord d'extrémité (540 ; 540') d'une paroi interne longitudinale (54 ; 54') du moyen de stockage 5. Cette quasi continuité permet, avantageusement, de diminuer, voire d'éviter, l'écoulement de produit à épandre au travers de cet interstice 55.

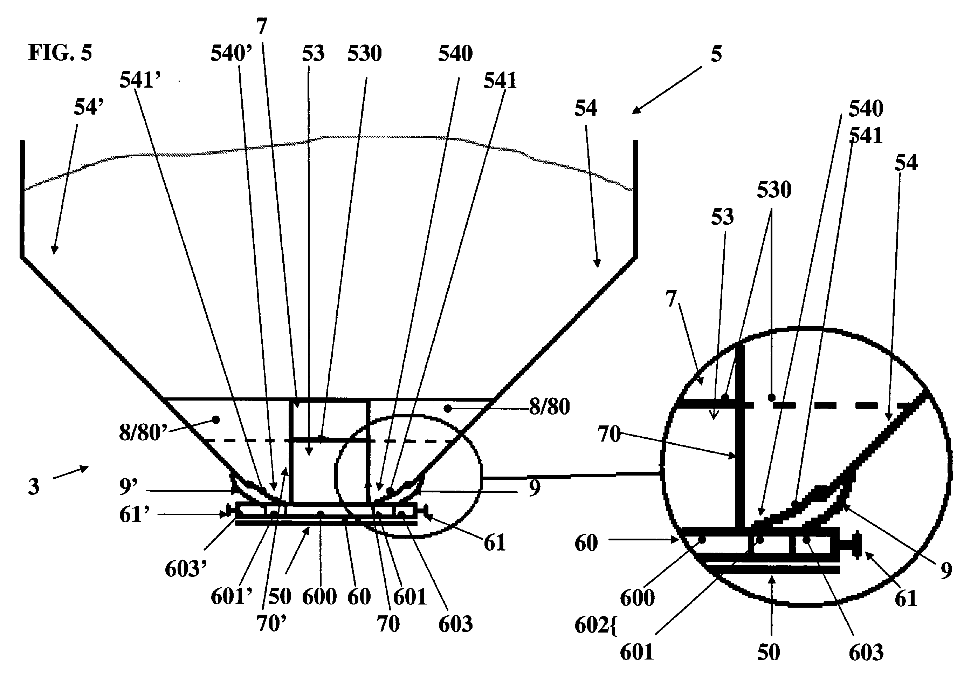

De manière additionnelle, le bord d'extrémité (540 ; 540') de chacune des parois internes longitudinales (54 ; 54') du moyen de stockage 5 est constitué par un joint d'étanchéité (541 ; 541') que comporte, alors, une telle paroi interne longitudinale (54 ; 54'). Tel que visible sur les figures 4 et 5, un tel joint d'étanchéité (541 ; 541') est maintenu en applique contre une des branches parallèles (601 ; 601') de chacun des éléments mobiles 60 situés à l'intérieur du moyen de stockage 5.

Là encore, un tel joint d'étanchéité (541 ; 541') permet, avantageusement, de diminuer, voire d'éviter, l'écoulement de produit à épandre au travers de l'interstice 55.

En fait, un tel joint d'étanchéité (541 ; 541') s'étend au moins à l'intérieur du moyen de stockage 5 et peut, également, s'étendre à l'extérieur de ce moyen de stockage 5 mais toujours en sorte de rester en retrait par rapport à la zone de retournement (décrite ci-dessous) des éléments mobiles 60, ceci de manière à ne pas entraver un tel retournement.

Tel qu'évoqué ci-dessus, le moyen d'acheminement 6 est conçu pour acheminer du produit à extraire en direction du dispositif d'épandage 4 et comporte des éléments mobiles (60 ; 60a ; 60b) ainsi que des moyens de raccordement (61 ; 61') agencés en sorte de constituer un circuit formant une boucle autour du fond 50 du moyen de stockage 5.

Un tel circuit et, par conséquent, un tel moyen d'acheminement 6 présente, alors et en partie aval du dispositif d'extraction 3, une partie aval 63, pourvue d'une extrémité aval, située à l'extérieur du moyen de stockage 5, et au niveau de laquelle les éléments mobiles 60, en défilement au-dessus du fond 50 dans la direction d'acheminement D du produit à extraire, se retournent et changent de direction pour se déplacer dans une direction opposée à celle D d'acheminement du produit, ceci en dessous de ce fond 50 (figure 1).

A ce propos, on observera que le dispositif d'extraction 3 comporte, alors, au moins en partie aval 63 du moyen d'acheminement 6 et au moins à l'extérieur du moyen de stockage 5, un moyen 7 pour canaliser le produit à extraire entre les branches parallèles (601, 601') des éléments mobiles 60.

Le produit a extraire qui, à l'intérieur du moyen de stockage 5, repose sur le fond 50, voire en partie sur les branches parallèles (601, 601'), est alors strictement confiné entre ces branches parallèles (601, 601'), ceci en partie aval 63 du moyen d'acheminement 6.

Ce moyen de canalisation 7 permet, avantageusement, de maintenir ce produit entre ces branches parallèles (601 ; 601') et d'éviter son écoulement en direction des moyens de raccordement (61 ; 61') et des moyens d'entraînement (62 ; 62'), ceci en partie aval 63 (plus particulièrement au niveau de l'extrémité aval) du moyen d'acheminement 6 et à l'extérieur du moyen de stockage 5.

En fait, ce moyen de canalisation 7 est positionné au dessus des éléments mobiles 60, entre les deux branches parallèles (601, 601') d'un tel élément mobile 60, et présente une largeur inférieure à l'espacement défini entre ces deux branches parallèles (601, 601').

La présence de ce moyen de canalisation 7 permet, alors, de dégager les branches parallèles (601, 601') et d'autoriser, ainsi, le basculement des éléments mobiles 60 en partie aval 63 des moyens d'acheminement 6, ceci en vue de leur retournement.

Selon un mode préféré de réalisation illustré figures 2 et 5, ce moyen 7 de canalisation comporte au moins deux parois longitudinales (70, 70'), de préférence parallèles, s'étendant à faible distance au dessus des racleurs 600 des éléments mobiles 60, ceci en dehors du moyen de stockage 5.

Un mode particulier de réalisation consiste en ce que ce moyen de canalisation 7 s'étend au moins jusqu'à proximité de l'extrémité aval du moyen d'acheminement 6, voire au-delà (figure 2). Ceci permet, avantageusement, d'alimenter le dispositif d'épandage 4 avec un maximum de produit extrait hors du moyen de stockage 5 et/ou d'éviter, là encore, un écoulement du produit à extraire en direction des moyens de raccordement (61 ; 61') et des moyens d'entraînement (62 ; 62').

Tel qu'évoqué ci-dessus, le moyen de stockage 5 comporte une ouverture 53 pour la sortie du produit à extraire.

En fait et selon un premier mode de réalisation de l'invention, cette ouverture 53 peut présenter, à proximité du fond 50 du moyen de stockage 5, une largeur inférieure à l'espacement défini entre les deux branches parallèles (601, 601') d'un élément mobile 60.

Dans un pareil cas, le moyen 7 de canalisation peut, avantageusement, se situer dans le prolongement de cette ouverture 53 (solution non représentée), voire encore être raccordé (notamment par soudure, boulonnage ou autre) directement au moyen de stockage 5 au niveau de cette ouverture 53.

Cependant et selon un mode préféré de réalisation de l'invention, cette ouverture 53 présente, à proximité du fond 50 du moyen de stockage 5, une largeur, d'une part, au moins égale à celle de l'espacement défini entre les deux branches parallèles (601 ; 601') d'un élément mobile 60 et, d'autre part, au plus égale à la distance entre les bords longitudinaux externes des deux branches (601 ; 601') d'un tel élément mobile 60, ceci de manière à éviter l'écoulement du produit en direction des moyens de raccordement (61 ; 61').

Tel qu'illustré figures 4 et 5, cette ouverture 53 est, de préférence, au moins délimitée par le fond 50 du moyen de stockage 5 ainsi que par les parois internes longitudinales (54 ; 54') de ce moyen de stockage 5, en particulier par les joints d'étanchéité (541 ; 541') que comportent ces parois (54 ; 54') et qui équipent le bord d'extrémité (540 ; 540') d'une telle paroi (54 ; 54').

Lorsque la largeur de l'ouverture 53 est au moins égale à celle de l'espacement défini entre les deux branches parallèles (601, 601') d'un élément mobile 60, la largeur de cette ouverture 53 est supérieure à celle du moyen 7 de canalisation du produit.

Dans un pareil cas, le dispositif d'extraction 3 est, avantageusement, complété par un moyen 8 pour orienter, à l'intérieur de ce moyen 7 de canalisation, le produit à extraire à sa sortie du moyen de stockage 5.

Tel qu'évoqué ci-dessus, ce moyen 7 de canalisation comporte des parois longitudinales (70, 70').

Aussi et selon un mode de réalisation particulier, ledit moyen 8 d'orientation comporte deux déflecteurs (80 ; 80') s'étendant à partir de ces parois longitudinales (70 ; 70') du moyen 7 de canalisation et en direction du moyen de stockage 5, ceci en divergeant.

Un mode particulier de réalisation consiste en ce que ces déflecteurs (80 ; 80') sont constitués, chacun, par une prolongation d'une paroi longitudinale (70 ; 70') de ce moyen 7 de canalisation.

En fait, un tel déflecteur (80 ; 80') peut être rendu solidaire des parois longitudinales (54 ; 54') du moyen de stockage 5, notamment par soudure, boulonnage ou autre.

Une caractéristique additionnelle consiste en ce qu'un tel déflecteur (80 ; 80') peut, encore, comporter un moyen pour le nettoyage d'un élément mobile 60, plus particulièrement des branches parallèles (601 ; 601') d'un tel élément mobile 60.

Un tel moyen de nettoyage peut, là encore, être constitué par un joint équipant le bord inférieur d'un tel déflecteur (80 ; 80') et en contact avec un tel élément mobile 60.

Ce moyen de nettoyage est conçu pour ramener le produit extrait entre les branches (601 ; 601') et pour éviter que du produit extrait reste sur la surface supérieur d'une telle branche (601 ; 601') et, lors du basculement de ces branches (601 ; 601'), ne provoque l'écoulement de ce produit extrait en direction des moyens de raccordement (61 ; 61') et/ou des moyens d'entraînement (62 ; 62').

Une caractéristique additionnelle de l'ouverture 53 du moyen de stockage 5 consiste en ce qu'elle est délimitée par un bord supérieur 530 résultant, notamment, d'une découpe réalisée dans la paroi arrière 52 de ce moyen de stockage 5.

Ce bord supérieur 530 est positionné à une distance déterminée du fond 50 du moyen de stockage 5 et délimite la hauteur de cette ouverture 53.

Tel qu'évoqué ci-dessus, le moyen 7 de canalisation présente une largeur au plus égale à la largeur de l'ouverture 53, voire (et de préférence) inférieure à celle de cette ouverture 53 (figures 2 et 5).

Dans un pareil cas, la hauteur de ce moyen 7 de canalisation est au moins égale, voire (et de préférence) supérieure à celle de cette ouverture 53 (figure 5).

Un mode préféré de réalisation consiste en ce que ce moyen 7 de canalisation présente, d'une part, une largeur inférieure à et, d'autre part, une hauteur supérieure à celle de cette ouverture 53 (figures 2 et 5).

Un tel mode de réalisation permet, avantageusement, de compenser les effets du rétrécissement du passage entre l'ouverture 53 du moyen de stockage 5 et le moyen 7 de canalisation.

Finalement, le dispositif 3 d'extraction comporte, encore, au moins en aval du moyen de stockage 5, au moins un moyen (9 ; 9') pour la protection d'au moins un moyen d'entraînement (62 ; 62'), voire encore d'au moins un moyen de raccordement (61 ; 61').

En fait, un tel moyen (9 ; 9') de protection est localisé de part et d'autre du moyen 7 de canalisation, au moins en aval du moyen 8 d'orientation, voire encore au niveau de celui-ci 8 (figures 2 et 5).

Là encore, un tel moyen de protection (9 ; 9') peut être constitué par un joint qui s'étend par-dessus, d'une part, la partie (603 ; 603') de liaison d'une portion en « U » 602 d'un élément mobile 60 à un moyen de raccordement (61 ; 61') et, d'autre part, la partie du fond 50 s'étendant en dehors du moyen de stockage 5, plus particulièrement en partie aval 63 du moyen d'acheminement 6.

Un tel moyen (9 ; 9') de protection permet, là encore, d'éviter l'écoulement du produit extrait en direction des moyens de raccordement (61 ; 61') et/ou des moyens d'entraînement (62 ; 62').

Finalement, l'invention concerne un engin 1 d'épandage d'un produit granuleux, notamment un produit de déneigement, adoptant la forme d'un camion comportant un châssis ainsi que, positionné sur ce châssis, un système 2 d'épandage du produit granuleux présentant les caractéristiques décrites ci-dessus.

## Revendications

1. Système (2) d'épandage d'un produit granuleux, notamment un produit de déneigement, comportant, d'une part, un dispositif (3) pour extraire ce produit granuleux et, d'autre part, un dispositif (4) pour épandre le produit extrait par ce dispositif d'extraction (3) lequel comporte:
- un moyen (5) pour stocker le produit granuleux comportant un fond (50) ainsi que des parois internes longitudinales (54 ; 54'), s'étendant en direction du fond (50), et présentant un bord d'extrémité (540 ; 540') s'étendant de manière longitudinale au dessus de ce fond (50);
- un moyen (6) pour acheminer le produit à extraire hors du moyen de stockage (5), ce moyen (6) d'acheminement comportant :
- une succession d'éléments mobiles (60 ; 60a ; 60b) par rapport au fond (50) du moyen de stockage (5) et comportant, chacun, au moins un moyen (600 ; 600a ; 600b) pour racler ce fond (50) et s'étendant transversalement par rapport à la direction (D) d'acheminement du produit à extraire ainsi que deux branches parallèles (601, 601') qui, au moins lorsque cet élément mobile (60 ; 60a ; 60b) est positionné à l'intérieur du moyen de stockage (5) :
- s'étendent à partir du moyen de raclage (600 ; 600a) que comporte un tel élément mobile (60 ; 60a) et en direction d'un autre élément mobile (60a ; 60b) de la succession d'éléments mobiles (60 ; 60a ; 60b) ;
- présentent, chacune (601, 601'), une extrémité libre positionnée à proximité de cet autre élément mobile (60a ; 60b);
- sont positionnées, chacune (601 ; 601'), entre le fond (50) et le bord d'extrémité (540 ; 540') d'une paroi interne longitudinale (54 ; 54') que comporte le moyen de stockage (5);
- au moins un moyen (61, 61') pour le raccordement d'au moins deux éléments mobiles (60 ; 60a ; 60b) se succédant dans la succession d'éléments mobiles (60 ; 60a ; 60b) ;
- au moins un moyen (62, 62') pour l'entraînement des éléments mobiles (60 ; 60a ; 60b) dans la direction (D) d'acheminement du produit à extraire;
**caractérisé en ce que** le bord d'extrémité (540;540') d'une paroi interne longitudinale (54;54') du d'une paroi interne longitudinale (54;54') du moyen de stockage (5) est constitué par un joint d'étanchéité (541 ; 541') maintenu en applique contre une des branches parallèles (601 ; 601') des éléments mobiles (60)

2. Système (2) d'épandage selon la revendication 1, **caractérisé par le fait qu'**un élément mobile (60) présente au moins une portion (602), adoptant une forme sensiblement en « U », comportant les deux branches parallèles (601, 601') ainsi que le moyen (600) de raclage, et s'étendant dans un plan qui, lorsque cet élément mobile (60) est positionné par dessus le fond (50) du moyen de stockage (5), est parallèle à ce fond (50).

3. Système (2) d'épandage selon l'une quelconque des revendications précédentes, **caractérisé par le fait qu'**un élément mobile (60) comporte une traverse, d'une part, à partir de laquelle s'étendent les branches parallèles (601 ; 601'), d'autre part, comportant le moyen de raclage (600) ainsi que, de part et d'autre de ce moyen de raclage (600) et dans le prolongement de celui-ci (600), des parties (603 ; 603') conçues pour relier cet élément mobile (60) à un moyen de raccordement (61 ; 61') et rendues solidaires d'un tel moyen de raccordement (61 ; 61') en étant soudées à un maillon que comporte une chaîne d'un tel moyen de raccordement (61 ; 61').

4. Système (2) d'épandage selon l'une quelconque des revendications précédentes, **caractérisé par le fait qu'**un élément mobile (60) est constitué par une pièce unique, d'une part, découpée dans une même plaque plane, d'autre part, comportant au moins les branches parallèles (601 ; 601') et le moyen de raclage (600), voire encore les parties de liaison (603 ; 603'), et, d'autre part encore, s'étendant dans un plan qui, lorsque cet élément mobile (60) est positionné par dessus le fond (50) du moyen de stockage (5), est parallèle à ce fond (50)

5. Système (2) d'épandage selon l'une quelconque des revendications précédentes, **caractérisé par** le fait lorsqu'un élément mobile (60) est positionné au dessus du fond (50) du moyen de stockage (5), les branches parallèles (601, 601') de cet élément mobile (60) sont orientées dans la direction (D) d'acheminement du produit à extraire ou, et de préférence, dans une direction opposée à celle (D) d'acheminement du produit à extraire.

6. Système (2) d'épandage selon l'une quelconque des revendications précédentes, **caractérisé par le fait qu'**il comporte, au moins en partie aval (63) du moyen d'acheminement (6) et au moins à l'extérieur du moyen de stockage (5), un moyen (7) pour canaliser le produit à extraire entre les branches parallèles (601, 601') des éléments mobiles (60), ce moyen de canalisation (7) étant positionné au dessus des éléments mobiles (60), entre les deux branches parallèles (601, 601') d'un tel élément mobile (60), et présentant une largeur inférieure à l'espacement défini entre ces deux branches parallèles (601, 601').

7. Système (2) d'épandage selon la revendication 6, **caractérisé par le fait que** le moyen (7) de canalisation comporte au moins deux parois longitudinales (70, 70'), de préférence parallèles, s'étendant à faible distance au dessus des racleurs (600) des éléments mobiles (60).

8. Système (2) d'épandage selon l'une quelconque des revendications précédentes, **caractérisé par le fait que** le moyen de stockage (5) comporte une ouverture (53) pour la sortie du produit à extraire, cette ouverture (53) présentant, à proximité du fond (50) du moyen de stockage (5), une largeur, d'une part, au moins égale à celle de l'espacement défini entre les deux branches parallèles (601 ; 601') d'un élément mobile (60) et, d'autre part, au plus égal à la distance entre les bords longitudinaux externes de ces deux branches (601 ; 601').

9. Système (2) d'épandage selon la revendication 8, **caractérisé par le fait que** l'ouverture (53) du moyen de stockage (5) est au moins délimitée par le fond (50) de ce moyen de stockage (5) et par les parois internes longitudinales (54 ; 54'), en particulier par des joints d'étanchéité (541 ; 541') que comportent ces parois internes longitudinales (54 ; 54') et qui constituent le bord d'extrémité (540 ; 540') de ces parois (54 ; 54') .

10. Système (2) d'épandage selon l'une quelconque des revendications 6 ou 7, **caractérisé par le fait qu'**il comporte un moyen (8) pour orienter, à l'intérieur du moyen de canalisation (7), le produit à extraire à sa sortie du moyen de stockage (5).

11. Système (2) d'épandage selon les revendications 7 et 10, **caractérisé par le fait que** le moyen d'orientation (8) comporte deux déflecteurs (80 ; 80') s'étendant à partir des parois longitudinales (70 ; 70') du moyen de canalisation (7) et en direction du moyen de stockage (5), ceci en divergeant.

12. Système (2) d'épandage selon les revendications 6 et 8, **caractérisé par le fait que** le moyen de canalisation (7) présente, d'une part, une largeur au plus égale à la largueur de l'ouverture (53) du moyen de stockage (5) et, d'autre part, une hauteur au moins égale à celle de cette ouverture (53).

13. Système (2) d'épandage selon l'une quelconque des revendications précédentes, **caractérisé par le fait qu'**il comporte, au moins en aval du moyen de stockage (5), au moins un moyen (9) pour la protection d'au moins un moyen d'entraînement (62 ; 62'), voire encore d'au moins un moyen de raccordement (61 ; 61').

14. Engin (1) d'épandage d'un produit granuleux, notamment un produit de déneigement, adoptant la forme d'un camion comportant un châssis ainsi que, positionné sur ce châssis, un système (2) d'épandage du produit granuleux, **caractérisé par le fait que** le système (2) d'épandage est conforme à l'une quelconque des revendications précédentes.

## Claims

1. A system (2) for spreading a granular product, especially a snow-clearing product, comprising, on the one hand, a device (3) for extracting this granular product and, on the other hand, a device (4) for spreading the product extracted by this extracting device (3), comprising:
- a means (5) for storing the granular product comprising a bottom (50) as well as longitudinal internal walls (54; 54') extending towards the bottom (50), and having an end edge (540; 540') extending in a longitudinal manner above this bottom (50);
- a means (6) for conveying the product to be extracted outside the storing means (5), this conveying means (6) comprising:
- a sequence of elements (60 ; 60a ; 60b) movable with respect to the bottom (50) of the storing means (5) and each comprising at least one means (600 ; 600a ; 600b) for scraping this bottom (50) and extending transversally with respect to the direction (D) of conveying of the product to be extracted as well as two parallel legs (601, 601'), which, at least when this movable element (60 ; 60a ; 60b) is positioned inside the storing means (5):
- extend from said scraping means (600 ; 600a) such movable element (60; 60a) comprises and towards another movable element (60a ; 60b) of the sequence of movable elements (60 ; 60a ; 60b) ;
- each (601, 601') having a free end positioned proximate this other movable element (60a ; 60b);
- are each (601, 601') positioned between the bottom (50) and the end edge (540 ; 540') of a longitudinal internal wall (54 ; 54') the storing means (5) comprises;
- at least one means (61 ; 61') for connecting at least two movable elements (60; 60a ; 60b), which follow each other in the sequence of movable elements (60 ; 60a ; 60b) ;
- at least one means (62 ; 62') for driving the movable elements (60; 60a ; 60b) in the direction (D) of conveying of the product to be extracted ;
wherein the end edge (540 ; 540') of a longitudinal internal wall (54 ; 54') of the storing means (5) is formed of a sealing gasket (541 ; 541') maintained applied against one of the parallel legs (601 ; 601') of the movable elements (60).

2. The spreading system (2) according to claim 1, wherein a movable element (60) has at least one portion (602), adopting a substantially U-shape, comprising the two parallel legs (601, 601') as well as the scraping means (600), and extending in a plane, which, when this movable element (60) is positioned above the bottom (50) of the storing means (5), is parallel to this bottom (50).

3. The spreading system (2) according to any of the preceding claims, wherein a movable element (60) comprises a traverse beam, on the one hand, from which extend the parallel legs (601, 601'), on the other hand, comprising the scraping means (600) as well as, on both sides of said scraping means (600) and in the extension of the latter (600), parts (603 ; 603') designed so as to connect this movable element (60) to a connecting means (61 ; 61') and made integral with such a connecting means (61 ; 61') by being welded to a link a chain of such a connecting means (61 ; 61') comprises.

4. The spreading system (2) according to any of the preceding claims, wherein a movable element (60) is formed of a single piece, on the one hand, cut out in one and the same flat plate, on the other hand, including at least the parallel legs (601 ; 601') and the scraping means (600), even also the linking parts (603 ; 603'), and, yet on the other hand, extending in a plane, which, when this movable element (60) is positioned above the bottom (50) of the storing means (5), is parallel to this bottom (50).

5. The spreading system (2) according to any of the preceding claims, wherein, when a movable element (60) is positioned above the bottom (50) of the storing means (5), the parallel legs (601, 601') of this movable element (60) are oriented in the direction (D) of conveying of the product to be extracted or, and preferably, in a direction opposite to that (D) of conveying of the product to be extracted.

6. The spreading system (2) according to any of the preceding claims, wherein it comprises, at least downstream (63) of the conveying means (6) and at least outside the storing means (5), a means (7) for guiding the product to be extracted between the parallel legs (601, 601') of the movable elements (60), this guiding means (7) being positioned above the movable elements (60), between the two parallel legs (601, 601') of such a movable element (60), and having a width smaller than the spacing defined between said two parallel legs (601, 601').

7. The spreading system (2) according to claim 6, wherein the guiding means (7) includes at least two, preferably parallel, longitudinal walls (70, 70') extending at a short distance above the scrapers (600) of the movable elements (60).

8. The spreading system (2) according to any of the preceding claims, wherein the storing means (5) includes an opening (53) for the exit of the product to be extracted, this opening (53) having, proximate the bottom (50) of the storing means (5), a width, on the one hand, at least equal to that of the spacing defined between the two parallel legs (601 ; 601') of a movable element (60) and, on the other hand, at most equal to the distance between the external longitudinal edges of said two legs (601, 601').

9. The spreading system (2) according to claim 8, wherein the opening (53) of the storing means (5) is at least delimited by the bottom (50) of this storing means (5) and by the longitudinal internal walls (54 ; 54'), in particular by the sealing gaskets (541 ; 541') said longitudinal internal walls (54 ; 54') include and which form the end edge (540 ; 540') of these walls (54 ; 54').

10. The spreading system (2) according to any of claims 6 or 7, wherein it includes a means (8) for orienting, inside the guiding means (7), the product to be extracted at its exit from the storing means (5).

11. The spreading system (2) according to claims 7 and 10, wherein the orienting means (8) includes two deflectors (80 ; 80') extending from the longitudinal walls (70 ; 70') of the guiding means (7) and towards the storing means (5), while diverging.

12. The spreading system (2) according to claims 6 and 8, wherein the guiding means (7) has, on the one hand, a width at most equal to the width of the opening (53) of the storing means (5) and, on the other hand, a height at least equal to that of this opening (53).

13. The spreading system (2) according to any of the preceding claims, wherein it includes, at least downstream of the storing means (5), at least one means (9) for protecting at least one driving means (62 ; 62'), even also at least one connecting means (61 ; 61').

14. A vehicle (1) for spreading a granular product, namely a snow-clearing product, adopting the form of a truck including a chassis as well as, positioned on this chassis, a system (2) for spreading the granular product, wherein the spreading system (2) is according to any of the preceding claims.

## Patentansprüche

1. System (2) zum Verteilen eines körnigen Produkts, insbesondere eines Schneeräumungsprodukts, umfassend, einerseits, eine Vorrichtung (3), um dieses körnige Produkt auszutragen, und, andererseits, eine Vorrichtung (4), um das Produkt, das durch diese Austragevorrichtung (3) ausgetragen wurde, zu verteilen, welches Folgendes umfasst:
- ein Mittel (5) für die Vorratsspeicherung des körnigen Produkts, das einen Boden (50) sowie innere Längswände (54 ; 54') umfasst, die sich in Richtung des Bodens (50) erstrecken, und einen Endrand (540 ; 540') aufweist, der sich in Längsrichtung über diesem Boden (50) erstreckt;
- ein Mittel (6), um das auszutragende Produkt außerhalb des Vorratsspeicherungsmittels (5) zu befördern, wobei dieses Beförderungsmittel (6) Folgendes umfasst:
- eine Reihenfolge von Elementen (60 ; 60a ; 60b), die hinsichtlich des Bodens (50) des Vorratsspeicherungsmittels (5) beweglich sind und jeweils zumindest ein Mittel (600 ; 600a ; 600b) umfassen, um diesen Boden (50) abzuschaben, und die sich quer hinsichtlich der Richtung der Beförderung (D) des auszutragenden Produkts erstrecken, sowie zwei parallele Schenkel (601, 601') umfassen, die, zumindest wenn dieses bewegliche Element (60 ; 60a ; 60b) im Innern des Vorratsspeicherungsmittels (5) positioniert ist:
- sich ab dem Abschabmittel (600 ; 600a), welches ein solches bewegliches Element (60 ; 60a) umfasst, und in Richtung auf ein anderes bewegliches Element (60a ; 60b) der Reihenfolge von beweglichen Elementen (60 ; 60a ; 60b) erstrecken;
- jeweils (601, 601') ein freies Ende aufweisen, das in der Nähe von diesem anderen beweglichen Element (60a ; 60b) positioniert ist;
- jeweils (601 ; 601') zwischen dem Boden (50) und dem Endrand (540 ; 540') einer inneren Längswand (54 ; 54'), welche das Vorratsspeicherungsmittel (5) umfasst, positioniert sind;
- zumindest ein Mittel (61, 61') für die Verbindung von zumindest zwei beweglichen Elementen (60 ; 60a ; 60b), die in der Reihenfolge von beweglichen Elementen (60 ; 60a ; 60b) anreihen;
- zumindest ein Mittel (62, 62') für den Antrieb der beweglichen Elemente (60 ; 60a ; 60b) in die Richtung der Beförderung (D) des auszutragenden Produkts;
**dadurch gekennzeichnet, dass** der Endrand (540 ; 540') einer inneren Längswand (54 ; 54') des Vorratsspeicherungsmittels (5) durch eine Dichtung (541 ; 541') gebildet ist, die gegen einen der parallelen Schenkel (601 ; 601') der beweglichen Elemente (60) anliegend gehalten wird.

2. System (2) zum Verteilen nach Anspruch 1, **dadurch gekennzeichnet, dass** ein bewegliches Element (60) zumindest einen Abschnitt (602) aufweist, der eine im wesentlichen U-förmige Gestalt annimmt, der die beiden parallelen Schenkel (601, 601') sowie das Mittel (600) zum Abschaben umfasst und sich in einer Ebene erstreckt, die, wenn dieses bewegliche Element (60) über dem Boden (50) des Vorratsspeicherungsmittels (5) positioniert ist, parallel zu diesem Boden (50) ist.

3. System (2) zum Verteilen nach irgendeinem der vorgehenden Ansprüche, **dadurch gekennzeichnet, dass** ein bewegliches Element (60) einen Querbalken umfasst, ab welchem, einerseits, sich die parallelen Schenkel (601 ; 601') erstrecken, der, andererseits, das Mittel zum Abschaben (600) sowie, beiderseits von diesem Abschabmittel (600) und in der Verlängerung von diesem (600), Teile (603 ; 603') umfasst, die vorgesehen sind, um dieses bewegliche Element (60) mit einem Verbindungsmittel (61 ; 61') zu verbinden, und die mit einem solchen Verbindungsmittel (61 ; 61') fest verbunden sind, indem sie an einem Kettenglied, welches eine Kette eines solchen Verbindungsmittels (61 ; 61') umfasst, geschweißt sind.

4. System (2) zum Verteilen nach irgendeinem der vorgehenden Ansprüche, **dadurch gekennzeichnet, dass** ein bewegliches Element (60) durch ein Einzelstück gebildet ist, das, einerseits, in derselben flachen Platte ausgeschnitten ist, das, andererseits, zumindest die parallelen Schenkel (601 ; 601') und das Abschabmittel (600), ja sogar noch die Verbindungteile (603 ; 603') umfasst, und das, andererseits noch, sich in einer Ebene erstreckt, die, wenn dieses bewegliche Element (60) über dem Boden (50) des Vorratsspeicherungsmittels (5) positioniert ist, parallel zu diesem Boden (50) ist.

5. System (2) zum Verteilen nach irgendeinem der vorgehenden Ansprüche, **dadurch gekennzeichnet, dass**, wenn ein bewegliches Element (60) über dem Boden (50) des Vorratsspeicherungsmittels (5) positioniert ist, die parallelen Schenkel (601, 601') dieses beweglichen Elements (60) in der Richtung der Beförderung (D) des auszutragenden Produkts oder/und vorzugsweise in einer Richtung, die jener der Beförderung (D) des auszutragenden Produkts entgegengesetzt ist, gerichtet sind.

6. System (2) zum Verteilen nach irgendeinem der vorgehenden Ansprüche, **dadurch gekennzeichnet, dass** es zumindest im unteren Teil (63) des Beförderungsmittels (6) und zumindest außerhalb des Vorratsspeicherungsmittels (5) ein Mittel (7) umfasst, um das auszutragende Produkt (60) zwischen den parallelen Schenkeln (601, 601') der beweglichen Elemente (60) zu schleusen, wobei dieses Schleusemittel (7) über den beweglichen Elementen (60) zwischen den beiden parallelen Schenkeln (601, 601') eines solchen beweglichen Elements (60) positioniert sei und eine Breite aufweist, die kleiner ist als der Abstand, der zwischen diesen beiden parallelen Schenkeln (601, 601') gebildet ist.

7. System (2) zum Verteilen nach Anspruch 6, **dadurch gekennzeichnet, dass** das Schleusemittel (7) zumindest zwei vorzugsweise parallele Längswände (70, 70') umfasst, die sich im geringen Abstand über den Schabern (600) der beweglichen Elemente (60) erstrecken.

8. System (2) zum Verteilen nach irgendeinem der vorgehenden Ansprüche, **dadurch gekennzeichnet, dass** das Vorratsspeicherungsmittel (5) eine Öffnung (53) für die Ausbringung des auszutragenden Produkts umfasst, wobei diese Öffnung (53) in der Nähe von dem Boden (50) des Vorratsspeicherungsmittels (5) eine Breite aufweist, die, einerseits, zumindest gleich groß ist wie jene des Abstands, der zwischen den beiden parallelen Schenkeln (601 ; 601') eines beweglichen Elements (60) gebildet ist, und die, andererseits, höchstens gleich groß ist wie der Abstand zwischen den äußeren Längsrändern dieser beiden Schenkel (601; 601').

9. System (2) zum Verteilen nach Anspruch 8, **dadurch gekennzeichnet, dass** die Öffnung (53) des Vorratsspeicherungsmittels (5) zumindest durch den Boden (50) dieses Vorratsspeicherungsmittels (5) und durch die inneren Längswände (54 ; 54'), ja insbesondere durch die Dichtungen (541 ; 541') abgegrenzt ist, die diese inneren Längswände (54 ; 54') umfassen und die den Endrand (540 ; 540') dieser Wände (54 ; 54') bilden.

10. System (2) zum Verteilen nach irgendeinem der Ansprüche 6 oder 7, **dadurch gekennzeichnet, dass** es ein Mittel (8) umfasst, um das auszutragende Produkt im Innern des Schleusemittels (7) zu seinem Austritt aus dem Vorratsspeicherungsmittel (5) zu richten.

11. System (2) zum Verteilen nach den Ansprüchen 7 und 10, **dadurch gekennzeichnet, dass** das Führungsmittel (8) zwei Umlenkbleche (80 ; 80') umfasst, die sich ab den Längswänden (70 ; 70') des Schleusemittels (7) und in Richtung des Vorratsspeicherungsmittels (5), und zwar sich entfernend, erstrecken.

12. System (2) zum Verteilen nach den Ansprüchen 6 und 8, **dadurch gekennzeichnet, dass** das Schleusemittel (7), einerseits, eine Breite aufweist, die höchstens gleich groß ist wie die Breite der Öffnung (53) des Vorratsspeicherungsmittels (5), und, andererseits, eine Höhe aufweist, die zumindest gleich groß ist wie jene dieser Öffnung (53).

13. System (2) zum Verteilen nach irgendeinem der vorgehenden Ansprüche, **dadurch gekennzeichnet, dass** es zumindest stromabwärts des Vorratsspeicherungsmittels (5) zumindest ein Mittel (9) für den Schutz von zumindest einem Antriebsmittel (62 ; 62'), ja noch sogar zumindest eines Verbindungsmittels (61 ; 61'), umfasst.

14. Gerät (1) zum Verteilen eines körnigen Produkts, insbesondere eines Schneeräumungsprodukts, das die Form eines Lastkraftwagens annimmt, umfassend ein Fahrgestell sowie, angeordnet auf diesem Fahrgestell, ein System (2) zum Verteilen des körnigen Produkts, **dadurch gekennzeichnet, dass** das System (2) zum Verteilen irgendeinem der vorstehenden Ansprüchen entspricht.
